# FASCICULE DE BREVET EUROPEEN

(11) **EP 4 257 491 B1**
(45) Date de publication et mention de la délivrance du brevet: **19.06.2024**
(21) Numéro de dépôt: 23161867.9
(22) Date de dépôt: 14.03.2023
(51) Int. Cl.: B64D 13/06, B64F 5/60, F02C 6/08, G01M 3/00, B64D 41/00

(54) **PROCÉDÉ DE SURVEILLANCE DE CANALISATIONS DE PRÉLÈVEMENT D'AIR D'UN AÉRONEF**
VERFAHREN ZUR ÜBERWACHUNG VON ZAPFLUFTLEITUNGEN EINES FLUGZEUGS
METHOD FOR MONITORING AIR BLEED DUCTS OF AN AIRCRAFT

(30) Priorité: 08.04.2022 FR 2203240
(43) Date de publication de la demande: 11.10.2023
(73) Titulaire: AIRBUS OPERATIONS (S.A.S.), 31060 Toulouse (FR)
(72) Inventeur: DESSERTENNE, Franck, 31060 TOULOUSE (FR)
(74) Mandataire: Airbus-OPS SAS

(56) Documents cités:
- DE-A1-102005 049 910
- FR-A1- 3 097 963
- US-B2- 9 823 154

## Description

Procédé de surveillance de canalisations de prélèvement d'air d'un aéronef.

L'invention est relative au domaine de la surveillance de l'état de fonctionnement d'un aéronef. De nombreux aéronefs comportent des canalisations de prélèvement d'air issu des moteurs de propulsion desdits aéronefs. Ces canalisations sont appelées canalisations de « Bleed » en anglais. L'air ainsi prélevé au niveau des moteurs est notamment utilisé pour alimenter un système de conditionnement d'air de la cabine de l'aéronef. Ces canalisations sont également reliées à un générateur de puissance auxiliaire de l'aéronef, aussi appelé APU (« Auxiliary Power Unit » en anglais), de façon à permettre le démarrage des moteurs de propulsion au moyen d'air comprimé fourni par l'APU. Lors de l'exploitation de l'aéronef par une compagnie aérienne, il peut se produire des fuites au niveau des canalisations de prélèvement d'air, en particulier du fait de vibrations ou suite à une opération de maintenance. Ces canalisations sont généralement équipées d'un système appelé OHDS (« Over Heat Détection System » en anglais) qui permet de détecter des fuites d'air chaud issu desdites canalisations. Toutefois, en raison de contraintes d'intégration mécanique, certaines parties des canalisations ne peuvent pas être équipées d'un tel système OHDS, en particulier des parties des canalisations situées à proximité des moteurs. Il existe donc un besoin pour détecter des fuites le plus tôt possible dans lesdites parties des canalisations, d'autant plus que ces parties sont généralement difficiles d'accès pour une inspection visuelle.

Les documents FR3.097.963A1, DE10 2005 049 910 B4 et US9.823.154B2 divulguent des procédés de surveillance de l'intégrité d'un ensemble de canalisations de prélèvement d'air issu de moteurs de propulsion d'un aéronef, selon l'art antérieur.

### EXPOSE DE L'INVENTION :

La présente invention a notamment pour but d'apporter une solution à ce problème. Elle concerne un procédé de surveillance de l'intégrité d'un ensemble de canalisations de prélèvement d'air issu de moteurs de propulsion d'un aéronef, l'aéronef comportant en outre un générateur de puissance auxiliaire, chaque canalisation s'étendant au moins entre l'un des moteurs de propulsion et le générateur de puissance auxiliaire, chaque canalisation comportant un capteur de température dans une zone de ladite canalisation située à proximité du moteur, le procédé étant caractérisé en ce qu'il comprend les étapes suivantes mises en oeuvre de façon automatique :
- A) au début de chaque utilisation de l'aéronef parmi un ensemble d'utilisations de l'aéronef pour lesquelles le générateur de puissance auxiliaire est utilisé lorsque l'aéronef est au sol, démarrer le générateur de puissance auxiliaire et envoyer de l'air issu du générateur de puissance auxiliaire dans les différentes canalisations de l'ensemble de canalisations ;
- B) pendant un laps de temps prédéterminé après le démarrage du générateur de puissance auxiliaire, acquérir de façon répétitive des mesures de températures issues des capteurs de température des différentes canalisations, selon une périodicité prédéterminée ;
- C) pour chaque canalisation, en fonction des mesures de températures acquises à l'étape B), déterminer une pente d'évolution temporelle de la température pendant ce laps de temps ;
- D) pour chaque canalisation, déterminer un écart entre la pente d'évolution temporelle de la température correspondant à ladite canalisation et une pente d'évolution temporelle de la température correspondant à au moins une autre canalisation de l'ensemble de canalisations ;
- E) pour chaque canalisation, déterminer un indicateur d'état de ladite canalisation en fonction de l'écart déterminé à l'étape D) pour ladite canalisation ;
- F) pour chaque canalisation, si l'indicateur d'état déterminé à l'étape E) est supérieur à un seuil prédéterminé, signaler une alerte de fuite de la canalisation.

Ainsi, le procédé conforme à l'invention permet de détecter une fuite d'une canalisation de prélèvement d'air sans nécessiter que cette canalisation soit équipée d'un système spécifique de détection de fuite.

Selon différents modes de réalisation pouvant être pris isolément ou en combinaison :
- l'aéronef étant un aéronef bimoteurs dans lequel l'ensemble de canalisations de prélèvement d'air comprend deux canalisations associées chacune à l'un des deux moteurs de propulsion de l'aéronef, pour chacune desdites deux canalisations l'écart déterminé à l'étape D) correspond à un écart entre la pente d'évolution temporelle de la température correspondant à cette canalisation et la pente d'évolution temporelle de la température correspondant à l'autre canalisation ;
- l'aéronef étant un aéronef quadrimoteurs dans lequel l'ensemble de canalisations de prélèvement d'air comprend quatre canalisations associées chacune à l'un des quatre moteurs de propulsion de l'aéronef, pour chacune desdites quatre canalisations l'écart déterminé à l'étape D) correspond à un écart entre la pente d'évolution temporelle de la température correspondant à cette canalisation et une médiane ou une moyenne des trois pentes d'évolution temporelle de la température correspondant respectivement aux trois autres canalisations ;
- le procédé comprend en outre :
   - une étape d'enregistrement d'informations mise en oeuvre à bord de l'aéronef, cette étape d'enregistrement d'informations consistant à enregistrer au moins les mesures de températures acquises à l'étape B) ou les pentes d'évolution temporelle de la température déterminées à l'étape C) ou l'écart déterminé à l'étape D) ; et
   - une étape de réception desdites informations par un calculateur situé au sol,
   et au moins les étapes E) et F) sont mises en oeuvre par ledit calculateur situé au sol ;
- l'étape C) comprend une sous-étape dite de correction, consistant à corriger au moins l'une des pentes déterminées pour les différentes canalisations, de façon à corriger les effets sur cette pente d'une différence de longueur entre au moins deux canalisations de l'ensemble de canalisations ;
- l'indicateur d'état de la canalisation déterminé à l'étape E) en fonction de l'écart déterminé à l'étape D) correspond à une médiane ou à une moyenne d'un ensemble d'écarts déterminés pour ladite canalisation pour plusieurs utilisations successives de l'aéronef sur une première plage de temps. De façon avantageuse, l'ensemble d'écarts comprend l'écart déterminé à l'étape D) ainsi que des écarts déterminés pour des utilisations de l'aéronef antérieures à l'utilisation de l'aéronef pour laquelle l'écart est déterminé à l'étape D). De façon avantageuse encore, la première plage de temps s'étend sur plusieurs jours ;
- l'indicateur d'état de la canalisation déterminé à l'étape E) correspond à la différence entre d'une part l'écart déterminé à l'étape D) et d'autre part une médiane ou une moyenne d'un ensemble d'écarts déterminés pour ladite canalisation pour plusieurs utilisations successives de l'aéronef, sur une deuxième plage de temps antérieure d'une troisième plage de temps à l'utilisation de l'aéronef pour laquelle l'écart est déterminé à l'étape D). De façon avantageuse, la deuxième plage de temps et la troisième plage de temps s'étendent chacune sur plusieurs jours.

### DESCRIPTION DETAILLEE :

L'invention sera mieux comprise à la lecture de la description qui suit et à l'examen des figures annexées.
La figure 1 illustre de façon schématique un mode de réalisation d'un système de distribution d'air dans un aéronef.
La figure 2 illustre un procédé de surveillance de canalisations de prélèvement d'air d'un aéronef, conforme à un mode de réalisation de l'invention.

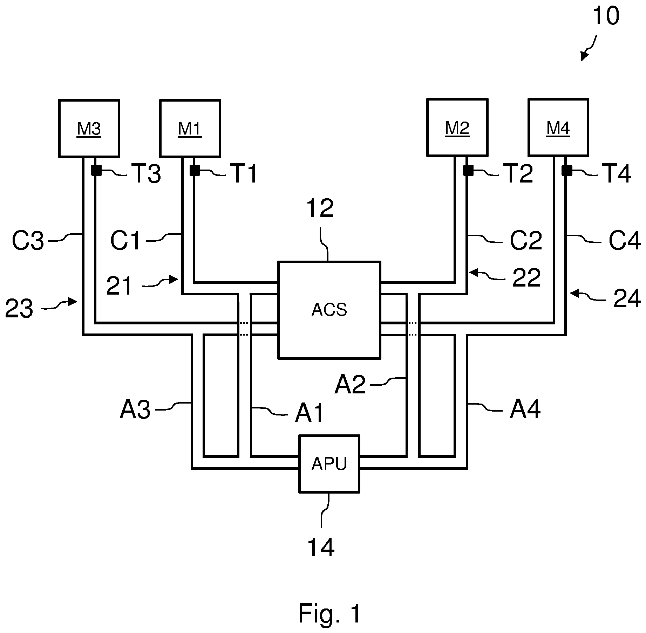

Le système 10 de distribution d'air dans un aéronef représenté sur la figure 1 comprend un ensemble de canalisations 21, 22, 23, 24 de prélèvement d'air issu de moteurs de propulsion M1, M2, M3, M4 de l'aéronef. L'aéronef comprend aussi un générateur de puissance auxiliaire 14, libellé APU sur la figure, ainsi qu'un système de conditionnement d'air 12, libellé ACS sur la figure. Les canalisations 21, 22, 23, 24 comprennent chacune une première partie, respectivement C1, C2, C3, C4, s'étendant entre d'une part le moteur de propulsion M1, M2, M3, M4 auquel est raccordée cette canalisation et d'autre part le système de conditionnement d'air 12. En outre, chacune des canalisations 21, 22, 23, 24 comprend une deuxième partie, respectivement A1, A2, A3, A4, s'étendant entre d'une part le générateur de puissance auxiliaire 14 et d'autre part la première partie C1, C2, C3, C4 de ladite canalisation. Chacune des canalisations 21, 22, 23, 24 comprend un capteur de température, respectivement T1, T2, T3, T4, dans une zone de ladite canalisation située à proximité du moteur de propulsion auquel est raccordée cette canalisation. En particulier, le capteur de température est placé dans une zone de la canalisation située à proximité d'un mât de fixation du moteur de propulsion. De préférence, ce capteur de température est un capteur de température déjà existant de l'aéronef : il n'est alors pas nécessaire d'ajouter un capteur pour la mise en oeuvre de l'invention. De préférence encore, une vanne est installée en série sur la canalisation, entre le capteur de température et le moteur. Cette vanne est par exemple une vanne de régulation de pression.

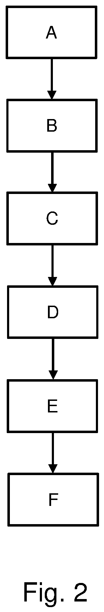

Le procédé, illustré sur la figure 2, de surveillance de l'intégrité de l'ensemble de canalisations 21, 22, 23, 24 de prélèvement d'air issu des moteurs de propulsion de l'aéronef, comprend un ensemble d'étapes A) à F) mises en oeuvre de façon automatique.

A l'étape A), au début de chaque utilisation de l'aéronef parmi un ensemble d'utilisations de l'aéronef pour lesquelles le générateur de puissance auxiliaire 14 est utilisé lorsque l'aéronef est au sol, le générateur de puissance auxiliaire 14 est démarré et de l'air issu du générateur de puissance auxiliaire est envoyé dans les différentes canalisations 21, 22, 23, 24 de l'ensemble de canalisations. Plus particulièrement, l'air issu du générateur de puissance auxiliaire 14 est envoyé dans les deuxièmes parties A1, A2, A3, A4 desdites canalisations, puis acheminé jusqu'aux premières parties respectives C1, C2, C3, C4 des canalisations et jusqu'au système de conditionnement d'air 12 de façon à permettre le conditionnement d'air d'une cabine passagers de l'aéronef. Lors du démarrage du générateur de puissance auxiliaire 14 au début d'une utilisation de l'aéronef, les moteurs de propulsion M1, M2, M3, M4 sont encore à l'arrêt. Le générateur de puissance auxiliaire réchauffe de l'air ambiant, qu'il envoie dans lesdites canalisations. Lors du démarrage du générateur de puissance auxiliaire, le réchauffage de l'air est progressif, de la température de l'air ambiant jusqu'à une température de consigne. La phase de montée en température de l'air réchauffé par le générateur de puissance auxiliaire et envoyé dans les canalisations, s'étale sur plusieurs minutes, par exemple 5 minutes.

A l'étape B), pendant un laps de temps prédéterminé après le démarrage du générateur de puissance auxiliaire 14, un calculateur embarqué de l'aéronef acquiert de façon répétitive des mesures de températures issues des capteurs de température T1, T2, T3, T4 des différentes canalisations, selon une périodicité prédéterminée, par exemple toutes les 10 à 15 secondes. Le laps de temps prédéterminé est inclus dans la phase de montée en température précitée de l'air réchauffé par le générateur auxiliaire de puissance. Ce laps de temps a par exemple une durée de 5 minutes. Comme indiqué précédemment, chaque capteur parmi les capteurs T1, T2, T3, T4 installé dans l'une des canalisations 21, 22, 23, 24 est situé dans une zone de ladite canalisation située à proximité du moteur de propulsion auquel est raccordée cette canalisation, en particulier à proximité d'un mât de fixation du moteur. L'air issu du générateur de puissance auxiliaire 14 circule dans la canalisation, entre le générateur de puissance auxiliaire 14 et le système de conditionnement d'air. De préférence, lorsque la canalisation comprend une vanne entre le capteur de température et le moteur, cette vanne est fermée pendant l'acquisition des mesures de températures. Ainsi, en l'absence de fuite de la canalisation, l'air issu du générateur de puissance auxiliaire circule peu dans la première partie de la canalisation, entre le système de conditionnement d'air et le capteur de température. Toutefois, l'air déjà contenu dans cette partie de la canalisation se réchauffe progressivement au contact de l'air chaud envoyé par le générateur de puissance auxiliaire vers le système de conditionnement d'air. Il en résulte que la température mesurée par le capteur de température s'accroit pendant le laps de temps précité, en fonction de la montée en température de l'air envoyé par le générateur de puissance auxiliaire, et aussi en fonction de la longueur de la canalisation de circulation d'air. En cas de fuite dans une partie de la canalisation située à proximité du moteur de propulsion, en particulier à proximité d'un mât de fixation du moteur de propulsion, de l'air chaud issu du générateur auxiliaire de puissance circule dans la première partie de la canalisation, entre le système de conditionnement d'air et le capteur de température. Il en résulte que pendant le laps de temps précité, la température mesurée par le capteur de température s'accroît de façon beaucoup plus rapide qu'en l'absence de fuite. L'accroissement de la température mesurée par le capteur de température est essentiellement fonction du débit d'air dans la canalisation, résultant de la fuite.

A l'étape C), un calculateur détermine pour chaque canalisation, une pente d'évolution temporelle de la température pendant ledit laps de temps en fonction des mesures de températures acquises à l'étape B). Cette pente est par exemple déterminée par le calculateur en utilisant une méthode de régression linéaire.

A l'étape D), un calculateur détermine pour chaque canalisation, un écart entre la pente d'évolution temporelle de la température correspondant à ladite canalisation et une pente d'évolution temporelle de la température correspondant à au moins une autre canalisation de l'ensemble de canalisations. Comme indiqué précédemment, la pente d'évolution temporelle pour une canalisation correspond à une montée en température fonction d'une part de la montée en température de l'air envoyé par le générateur de puissance auxiliaire, et d'autre part de la longueur de la canalisation de circulation d'air et du débit de l'air dans ladite canalisation.

Dans un mode particulier de réalisation, l'étape D) comprend en outre une sous-étape de filtrage de bruit de l'écart ainsi déterminé, ce bruit correspondant notamment à un bruit des mesures acquises à l'étape B) ou encore à des fuites résiduelles dans les canalisations en l'absence de défaillance desdites canalisations, etc. Lors du filtrage, il est attribué une valeur nulle aux écarts dont la valeur absolue est inférieure à un seuil de bruit prédéterminé.

De façon avantageuse, lorsque deux canalisations de l'ensemble de canalisations sont de longueurs substantiellement différentes, l'étape C) comprend une sous-étape dite de correction, consistant à corriger au moins l'une des pentes déterminées pour ces canalisations, de façon à corriger les effets sur cette pente de la différence de longueur entre les deux canalisations de l'ensemble de canalisations.

Etant donné que l'air est envoyé dans les différentes canalisations par le même générateur de puissance auxiliaire, la pente de montée en température de l'air envoyé par le générateur de puissance auxiliaire influe sur la pente d'évolution temporelle de la température mesurée pour chaque canalisation considérée individuellement, mais elle influe peu sur l'écart entre les pentes d'évolution temporelle des températures mesurées pour deux canalisations. D'autre part, lorsque les canalisations sont de longueurs sensiblement égales, la longueur des canalisations n'influe pas sur l'écart entre les pentes d'évolution temporelle des températures mesurées pour deux canalisations. Il en est de même lorsque deux canalisations sont de longueurs différentes et que l'une des pentes est corrigée à la sous-étape précitée de l'étape C). Par conséquent, l'écart entre les pentes d'évolution temporelle des températures mesurées pour deux canalisations varie uniquement en fonction des débits respectifs de l'air dans les deux canalisations. En l'absence de fuite dans l'une des canalisations, ces débits sont similaires et par conséquent, la valeur de l'écart est proche de zéro. En cas de fuite dans une partie d'une canalisation située à proximité du moteur de propulsion auquel est raccordée cette canalisation, en particulier à proximité d'un mât de fixation du moteur, le débit de l'air dans la canalisation augmente et par conséquent l'air chaud arrive plus vite jusqu'au capteur de température. Il en est de même en cas de fuite d'air d'un équipement raccordé à la canalisation, à proximité du moteur de propulsion ou d'un mât de fixation du moteur. Un tel équipement correspond par exemple à un rafraichisseur d'air, appelé « precooler » en anglais. Par conséquent, une telle fuite d'air entraîne une augmentation de la pente de montée en température pour cette canalisation. Il en résulte que l'écart entre cette pente de montée en température et une pente de montée en température déterminée pour une autre canalisation de l'ensemble de canalisations est alors supérieur à une valeur prédéterminée.

A l'étape E), un calculateur détermine pour chaque canalisation, un indicateur d'état de ladite canalisation en fonction de l'écart déterminé à l'étape D) pour ladite canalisation. L'indicateur d'état déterminé pour une canalisation est inférieur en valeur absolue à un seuil prédéterminé, lorsqu'il correspond à une absence de fuite de la canalisation. L'indicateur d'état est supérieur en valeur absolue au seuil prédéterminé, lorsqu'il correspond à une fuite de la canalisation. En particulier, la détermination de l'indicateur d'état à l'étape E) s'appuie sur un historique de valeurs d'écarts déterminées à l'étape D).

Selon une première alternative, l'indicateur d'état de la canalisation déterminé à l'étape E) en fonction de l'écart déterminé à l'étape D) correspond à une médiane ou à une moyenne d'un ensemble d'écarts déterminés pour ladite canalisation pour plusieurs utilisations successives de l'aéronef sur une première plage de temps. Cet ensemble d'écarts comprend l'écart déterminé à l'étape D), pour une utilisation considérée de l'aéronef, ainsi que des écarts déterminés pour des utilisations de l'aéronef antérieures à l'utilisation considérée de l'aéronef pour laquelle l'écart est déterminé à l'étape D). De façon particulière, la première plage de temps s'étend sur plusieurs jours, par exemple sur 7 jours. Par conséquent, la première plage de temps s'étend entre 1 jour et 7 jours avant l'utilisation considérée de l'aéronef. Le fait de prendre comme indicateur d'état la médiane ou la moyenne des écarts déterminés pendant cette première plage de temps qui s'étend sur plusieurs jours, permet de détecter une fuite correspondant à une dégradation lente de la canalisation d'air ou d'un équipement raccordé à la canalisation, avant que cette dégradation entraîne des dégradations de l'environnement de la canalisation. En pratique, une dégradation lente correspond par exemple à une fuite d'un rafraichisseur d'air raccordé à la canalisation, dans une partie de la canalisation située à proximité d'un moteur propulsion ou d'un mât de fixation d'un moteur de l'aéronef.

Selon une deuxième alternative, l'indicateur d'état de la canalisation déterminé à l'étape E) correspond à la différence entre d'une part l'écart déterminé à l'étape D) et d'autre part une médiane ou une moyenne d'un ensemble d'écarts déterminés pour ladite canalisation pour plusieurs utilisations successives de l'aéronef, sur une deuxième plage de temps antérieure d'une troisième plage de temps à l'utilisation considérée de l'aéronef pour laquelle l'écart est déterminé à l'étape D). De façon particulière, la deuxième plage de temps et la troisième plage de temps s'étendent chacune sur plusieurs jours. Par exemple, la deuxième plage de temps s'étend sur 14 jours et la troisième plage de temps s'étend sur 7 jours. Par conséquent, la deuxième plage de temps s'étend alors entre 8 jours et 21 jours avant l'utilisation considérée de l'aéronef. La troisième plage de temps est choisie suffisamment longue pour que la deuxième plage de temps puisse être considérée suffisamment antérieure à l'utilisation considérée de l'aéronef pour laquelle l'écart est déterminé à l'étape D), de telle façon que même si une dégradation rapide de la canalisation se produit lors de ladite utilisation considérée de l'aéronef, la canalisation n'était pas encore dégradée pendant la deuxième plage de temps. La médiane ou la moyenne de l'ensemble d'écarts déterminés pour la canalisation pour plusieurs utilisations successives de l'aéronef sur la deuxième plage de temps, correspond ainsi à une valeur de référence de l'écart en l'absence de dégradation de la canalisation. Par conséquent, l'indicateur d'état de la canalisation déterminé à l'étape E) correspond à la différence entre d'une part l'écart déterminé à l'étape D) pour l'utilisation considérée de l'aéronef et cette valeur de référence de l'écart. En l'absence de fuite de la canalisation lors de l'utilisation considérée de l'aéronef, la valeur de l'indicateur d'état est sensiblement nulle, c'est-à-dire inférieure en valeur absolue à un seuil prédéterminé. La valeur du seuil prédéterminé est choisie de telle façon qu'en cas de fuite lors de l'utilisation considérée de l'aéronef, la valeur de l'indicateur d'état est supérieure au seuil prédéterminé. Du fait du calcul de l'indicateur d'état par différence entre l'écart déterminé à l'étape D) pour l'utilisation considérée de l'aéronef et ladite valeur de référence de l'écart (pendant la deuxième plage de temps), cette deuxième alternative permet de déterminer une fuite correspondant à une dégradation rapide de la canalisation ou d'un équipement raccordé à la canalisation, lors de ladite utilisation considérée de l'aéronef. En pratique, une dégradation rapide correspond par exemple à une fuite de la canalisation elle-même.

De façon particulière, le procédé comprend à la fois le calcul d'un indicateur d'état de la canalisation selon la première alternative et le calcul d'un indicateur d'état de la canalisation selon la deuxième alternative. Cela permet de détecter des fuites de la canalisation correspondant aussi bien à des dégradations lentes de la canalisation qu'à des dégradations rapides de la canalisation. Les valeurs du seuil prédéterminé peuvent être différentes pour la première alternative et pour la deuxième alternative. Par exemple, l'homme du métier ajuste ces valeurs de façon expérimentale. En pratique, étant donné que dans la deuxième alternative l'indicateur d'état est calculé par différence entre d'une part l'écart déterminé seulement pour l'utilisation considérée de l'aéronef et d'autre part ladite valeur de référence de l'écart, afin d'éviter des détections intempestives de fuite, la valeur du seuil correspondant à cette deuxième alternative est choisie supérieure à la valeur du seuil correspondant à la première alternative.

A l'étape F), pour chaque canalisation, un calculateur signale une alerte de fuite de la canalisation si l'indicateur d'état déterminé à l'étape E) est supérieur au seuil prédéterminé. Cela permet d'envoyer un opérateur de maintenance pour réparer la canalisation avant que la fuite d'air chaud entraîne un endommagement de l'environnement de la canalisation.

Selon une première alternative, le procédé est mis en oeuvre à bord de l'aéronef. Les calculateurs mentionnés aux étapes B) à F) correspondent alors à un ou plusieurs calculateurs embarqués de l'aéronef. Dans un mode de réalisation, ces calculateurs correspondent alors à un calculateur de maintenance de l'aéronef. Dans un autre mode de réalisation, le calculateur mentionné à l'étape B) correspond à un calculateur d'un enregistreur de données de vol de l'aéronef et les calculateurs mentionnés aux étapes C) à F) correspondent à un calculateur de maintenance de l'aéronef.

Selon une deuxième alternative, le procédé comprend en outre :
- une étape d'enregistrement d'informations mise en oeuvre à bord de l'aéronef, cette étape d'enregistrement d'informations consistant à enregistrer au moins les mesures de températures acquises à l'étape B) ou les pentes d'évolution temporelle de la température déterminées à l'étape C) ou l'écart déterminé à l'étape D) ; et
- une étape de réception desdites informations par un calculateur situé au sol. Au moins les étapes E) et F) sont alors mises en oeuvre par le calculateur situé au sol. Ainsi, dans un mode de réalisation, les mesures de températures acquises à l'étape B) sont enregistrées par un calculateur embarqué de l'aéronef, par exemple un calculateur d'un enregistreur de données de vol de l'aéronef. Ces mesures sont transmises au sol par un système de communications de l'aéronef et elles sont reçues par un calculateur situé au sol, par exemple un calculateur d'un centre de maintenance de la compagnie aérienne exploitant l'aéronef. Ce calculateur met alors en oeuvre les étapes C) à F). Dans un autre mode de réalisation, les étapes B) et C) sont mises en oeuvre par un même calculateur embarqué de l'aéronef qui acquiert à l'étape B) les mesures issues des capteurs de température et qui détermine à l'étape C) les pentes d'évolution temporelle des températures et enregistre les valeurs desdites pentes dans une mémoire embarquée à bord de l'aéronef, par exemple dans un enregistreur de données de vol. Les valeurs des pentes sont ensuite transmises au sol comme dans le mode de réalisation précédent et le calculateur au sol met en oeuvre les étapes D) à F).

Les différents modes de réalisation précités sont donnés uniquement à titre d'exemples et ils ne sont pas limitatifs de l'invention. D'autres répartitions des calculateurs mentionnés aux étapes B) à F) sont possibles sans sortir du cadre de l'invention, que ce soit entre des calculateurs embarqués à bord de l'aéronef ou entre des calculateurs situés au sol.

Dans un mode particulier de réalisation, lorsque l'aéronef est un aéronef quadrimoteurs dans lequel l'ensemble de canalisations de prélèvement d'air comprend quatre canalisations 21, 22, 23, 24 associées chacune à l'un des quatre moteurs de propulsion M1, M2, M3, M4 de l'aéronef, pour chacune desdites quatre canalisations l'écart déterminé à l'étape D) correspond à un écart entre la pente d'évolution temporelle de la température correspondant à cette canalisation et une médiane ou une moyenne des trois pentes d'évolution temporelle de la température correspondant respectivement aux trois autres canalisations.

Dans un autre mode particulier de réalisation, lorsque l'aéronef est un aéronef bimoteurs dans lequel l'ensemble de canalisations de prélèvement d'air comprend deux canalisations 21, 22 associées chacune à l'un des deux moteurs de propulsion M1, M2 de l'aéronef, pour chacune desdites deux canalisations l'écart déterminé à l'étape D) correspond à un écart entre la pente d'évolution temporelle de la température correspondant à cette canalisation et la pente d'évolution temporelle de la température correspondant à l'autre canalisation.

## Revendications

1. Procédé de surveillance de l'intégrité d'un ensemble de canalisations (21, 22, 23, 24) de prélèvement d'air issu de moteurs de propulsion (M1, M2, M3, M4) d'un aéronef, l'aéronef comportant en outre un générateur de puissance auxiliaire (14), chaque canalisation s'étendant au moins entre l'un des moteurs de propulsion et le générateur de puissance auxiliaire, chaque canalisation comportant un capteur de température (T1, T2, T3, T4) dans une zone de ladite canalisation située à proximité du moteur, le procédé étant **caractérisé en ce qu'**il comprend les étapes suivantes mises en oeuvre de façon automatique :
- A) au début de chaque utilisation de l'aéronef parmi un ensemble d'utilisations de l'aéronef pour lesquelles le générateur de puissance auxiliaire est utilisé lorsque l'aéronef est au sol, démarrer le générateur de puissance auxiliaire (14) et envoyer de l'air issu du générateur de puissance auxiliaire dans les différentes canalisations de l'ensemble de canalisations ;
- B) pendant un laps de temps prédéterminé après le démarrage du générateur de puissance auxiliaire, acquérir de façon répétitive des mesures de températures issues des capteurs de température (T1, T2, T3, T4) des différentes canalisations, selon une périodicité prédéterminée ;
- C) pour chaque canalisation, en fonction des mesures de températures acquises à l'étape B), déterminer une pente d'évolution temporelle de la température pendant ce laps de temps ;
- D) pour chaque canalisation, déterminer un écart entre la pente d'évolution temporelle de la température correspondant à ladite canalisation et une pente d'évolution temporelle de la température correspondant à au moins une autre canalisation de l'ensemble de canalisations ;
- E) pour chaque canalisation, déterminer un indicateur d'état de ladite canalisation en fonction de l'écart déterminé à l'étape D) pour ladite canalisation ;
- F) pour chaque canalisation, si l'indicateur d'état déterminé à l'étape E) est supérieur à un seuil prédéterminé, signaler une alerte de fuite de la canalisation.

2. Procédé selon la revendication 1, **caractérisé en ce que** l'aéronef étant un aéronef bimoteurs dans lequel l'ensemble de canalisations de prélèvement d'air comprend deux canalisations associées chacune à l'un des deux moteurs de propulsion de l'aéronef, pour chacune desdites deux canalisations l'écart déterminé à l'étape D) correspond à un écart entre la pente d'évolution temporelle de la température correspondant à cette canalisation et la pente d'évolution temporelle de la température correspondant à l'autre canalisation.

3. Procédé selon la revendication 1, **caractérisé en ce que** l'aéronef étant un aéronef quadrimoteurs dans lequel l'ensemble de canalisations de prélèvement d'air comprend quatre canalisations associées chacune à l'un des quatre moteurs de propulsion de l'aéronef, pour chacune desdites quatre canalisations l'écart déterminé à l'étape D) correspond à un écart entre la pente d'évolution temporelle de la température correspondant à cette canalisation et une médiane ou une moyenne des trois pentes d'évolution temporelle de la température correspondant respectivement aux trois autres canalisations.

4. Procédé selon l'une quelconque des revendications précédentes, **caractérisé en ce qu'**il comprend en outre :
- une étape d'enregistrement d'informations mise en oeuvre à bord de l'aéronef, cette étape d'enregistrement d'informations consistant à enregistrer au moins les mesures de températures acquises à l'étape B) ou les pentes d'évolution temporelle de la température déterminées à l'étape C) ou l'écart déterminé à l'étape D) ; et
- une étape de réception desdites informations par un calculateur situé au sol, et **en ce qu'**au moins les étapes E) et F) sont mises en oeuvre par ledit calculateur situé au sol.

5. Procédé selon l'une quelconque des revendications précédentes, **caractérisé en ce que** l'étape C) comprend une sous-étape dite de correction, consistant à corriger au moins l'une des pentes déterminées pour les différentes canalisations, de façon à corriger les effets sur cette pente d'une différence de longueur entre au moins deux canalisations de l'ensemble de canalisations.

6. Procédé selon l'une quelconque des revendications précédentes, **caractérisé en ce que** l'indicateur d'état de la canalisation déterminé à l'étape E) en fonction de l'écart déterminé à l'étape D) correspond à une médiane ou à une moyenne d'un ensemble d'écarts déterminés pour ladite canalisation pour plusieurs utilisations successives de l'aéronef sur une première plage de temps.

7. Procédé selon la revendication précédente, **caractérisé en ce que** l'ensemble d'écarts comprend l'écart déterminé à l'étape D) ainsi que des écarts déterminés pour des utilisations de l'aéronef antérieures à l'utilisation de l'aéronef pour laquelle l'écart est déterminé à l'étape D).

8. Procédé selon la revendication précédente, **caractérisé en ce que** la première plage de temps s'étend sur plusieurs jours.

9. Procédé selon l'une quelconque des revendications 1 à 5, **caractérisé en ce que** l'indicateur d'état de la canalisation déterminé à l'étape E) correspond à la différence entre d'une part l'écart déterminé à l'étape D) et d'autre part une médiane ou une moyenne d'un ensemble d'écarts déterminés pour ladite canalisation pour plusieurs utilisations successives de l'aéronef, sur une deuxième plage de temps antérieure d'une troisième plage de temps à l'utilisation de l'aéronef pour laquelle l'écart est déterminé à l'étape D).

10. Procédé selon la revendication précédente, **caractérisé en ce que** la deuxième plage de temps et la troisième plage de temps s'étendent chacune sur plusieurs jours.

## Patentansprüche

1. Verfahren zur Überwachung der Integrität eines Satzes Leitungen (21, 22, 23, 24) zum Zapfen von Luft aus Antriebsmotoren (M1, M2, M3, M4) eines Flugzeugs, wobei das Flugzeug ferner ein Hilfstriebwerk (14) umfasst, wobei sich jede Leitung mindestens zwischen einem der Antriebsmotoren und dem Hilfstriebwerk erstreckt, wobei jede Leitung einen Temperatursensor (T1, T2, T3, T4) in einem in der Nähe des Motors gelegenen Bereich der Leitung umfasst, wobei das Verfahren **dadurch gekennzeichnet ist, dass** es die folgenden Schritte beinhaltet, die automatisch durchgeführt werden:
- A) zu Beginn jeder Verwendung des Flugzeugs von einer Reihe von Verwendungen des Flugzeugs, bei denen das Hilfstriebwerk verwendet wird, wenn sich das Flugzeug am Boden befindet, Starten des Hilfstriebwerks (14) und Senden von Luft aus dem Hilfstriebwerk in die unterschiedlichen Leitungen des Satzes Leitungen;
- B) während einer vorbestimmten Zeitspanne nach dem Starten des Hilfstriebwerks, wiederholtes Erfassen von Temperaturmessungen von den Temperatursensoren (T1, T2, T3, T4) der unterschiedlichen Leitungen gemäß einer vorbestimmten Periodizität;
- C) für jede Leitung, Bestimmen, in Abhängigkeit von den in Schritt B) erfassten Temperaturmessungen, eines zeitlichen Verlaufs der Temperatur während dieser Zeitspanne;
- D) für jede Leitung, Bestimmen einer Abweichung zwischen dem zeitlichen Temperaturverlauf, der der Leitung entspricht, und einem zeitlichen Temperaturverlauf, der mindestens einer anderen Leitung des Satzes Leitungen entspricht;
- E) für jede Leitung, Bestimmen eines Zustandsindikators der Leitung in Abhängigkeit von der in Schritt D) für die Leitung bestimmten Abweichung;
- F) für jede Leitung, wenn der in Schritt E) bestimmte Zustandsindikator größer als ein vorbestimmter Schwellenwert ist, Ausgeben einer Leckwarnung für die Leitung.

2. Verfahren nach Anspruch 1, **dadurch gekennzeichnet, dass**, wenn das Flugzeug ein zweimotoriges Flugzeug ist, bei dem der Satz Zapfluftleitungen zwei Leitungen beinhaltet, die jeweils mit einem der zwei Antriebsmotoren des Flugzeugs assoziiert sind, für jede der zwei Leitungen die in Schritt D) bestimmte Abweichung einer Abweichung zwischen dem zeitlichen Temperaturverlauf, der dieser Leitung entspricht, und dem zeitlichen Temperaturverlauf, der der anderen Leitung entspricht, entspricht.

3. Verfahren nach Anspruch 1, **dadurch gekennzeichnet, dass**, wenn das Flugzeug ein viermotoriges Flugzeug ist, bei dem der Satz Zapfluftleitungen vier Leitungen beinhaltet, die jeweils mit einem der vier Antriebsmotoren des Flugzeugs assoziiert sind, für jede der vier Leitungen die in Schritt D) bestimmte Abweichung einer Abweichung zwischen dem zeitlichen Temperaturverlauf, der dieser Leitung entspricht, und einem Median oder Mittelwert der drei zeitlichen Temperaturverläufe, die jeweils den drei anderen Leitungen entsprechen, entspricht.

4. Verfahren nach einem beliebigen der vorhergehenden Ansprüche, **dadurch gekennzeichnet, dass** es ferner Folgendes umfasst:
- einen Schritt des Aufzeichnens von Informationen, der an Bord des Flugzeugs durchgeführt wird, wobei dieser Schritt des Aufzeichnens von Informationen darin besteht, mindestens die in Schritt B) erfassten Temperaturmessungen oder die in Schritt C) bestimmten zeitlichen Temperaturverläufe oder die in Schritt D) bestimmte Abweichung aufzuzeichnen; und
- einen Schritt des Empfangens der Informationen durch einen am Boden befindlichen Rechner,
und dass mindestens die Schritte E) und F) durch den am Boden befindlichen Rechner durchgeführt werden.

5. Verfahren nach einem beliebigen der vorhergehenden Ansprüche, **dadurch gekennzeichnet, dass** Schritt C) einen sogenannten Korrekturteilschritt beinhaltet, der darin besteht, mindestens einen der für die unterschiedlichen Leitungen bestimmten Verläufe zu korrigieren, um die Auswirkungen eines Längenunterschieds zwischen mindestens zwei Leitungen des Satzes Leitungen auf diesen Verlauf zu korrigieren.

6. Verfahren nach einem beliebigen der vorhergehenden Ansprüche, **dadurch gekennzeichnet, dass** der Zustandsindikator der Leitung, der in Schritt E) in Abhängigkeit von der in Schritt D) bestimmten Abweichung bestimmt wird, einem Median oder Mittelwert eines Satzes Abweichungen, die für die Leitung für mehrere aufeinanderfolgende Verwendungen des Flugzeugs über einen ersten Zeitbereich bestimmt wurden, entspricht.

7. Verfahren nach dem vorhergehenden Anspruch, **dadurch gekennzeichnet, dass** der Satz Abweichungen die in Schritt D) bestimmte Abweichung sowie Abweichungen beinhaltet, die für Verwendungen des Flugzeugs bestimmt wurden, die vor der Verwendung des Flugzeugs liegen, für die die Abweichung in Schritt D) bestimmt wird.

8. Verfahren nach dem vorhergehenden Anspruch, **dadurch gekennzeichnet, dass** sich der erste Zeitbereich über mehrere Tage erstreckt.

9. Verfahren nach einem beliebigen der Ansprüche 1 bis 5, **dadurch gekennzeichnet, dass** der in Schritt E) bestimmte Zustandsindikator der Leitung der Differenz zwischen einerseits der in Schritt D) bestimmten Abweichung und andererseits einem Median oder Mittelwert eines Satzes Abweichungen entspricht, die für die Leitung für mehrere aufeinanderfolgende Verwendungen des Flugzeugs über einen zweiten Zeitbereich, der um einen dritten Zeitbereich vor der Verwendung des Flugzeugs, für die die Abweichung in Schritt D) bestimmt wird, liegt, bestimmt wurden.

10. Verfahren nach dem vorhergehenden Anspruch, **dadurch gekennzeichnet, dass** sich der zweite Zeitbereich und der dritte Zeitbereich jeweils über mehrere Tage erstrecken.

## Claims

1. Method for monitoring the integrity of a set of air bleed lines (21, 22, 23, 24) for bleeding air from propulsion engines (M1, M2, M3, M4) of an aircraft, the aircraft further comprising an auxiliary power unit (14), each line extending at least between one of the propulsion engines and the auxiliary power unit, each line comprising a temperature sensor (T1, T2, T3, T4) in a zone of said line situated close to the engine, the method being **characterized in that** it comprises the following steps implemented automatically:
- A) at the start of each use of the aircraft from among a set of uses of the aircraft for which the auxiliary power unit is used when the aircraft is on the ground, starting the auxiliary power unit (14) and sending air from the auxiliary power unit into the various lines of the set of lines;
- B) during a predetermined period of time after the starting of the auxiliary power unit, repetitively acquiring temperature measurements from the temperature sensors (T1, T2, T3, T4) of the various lines, at a predetermined periodicity;
- C) for each line, as a function of the temperature measurements acquired in step B), determining a gradient for rate of change in temperature with respect to time during this period of time;
- D) for each line, determining a discrepancy between the gradient for rate of change in temperature with respect to time corresponding to said line and a gradient for rate of change in temperature with respect to time corresponding to at least one other line of the set of lines;
- E) for each line, determining a condition indicator for said line as a function of the discrepancy determined in step D) for said line;
- F) for each line, if the condition indicator determined in step E) is above a predetermined threshold, issuing an alert to the fact that the line has a leak.

2. Method according to Claim 1, **characterized in that**, with the aircraft being a two-engine aircraft in which the set of air bleed lines comprises two lines each one associated with one of the two aircraft propulsion engines, for each of said two lines the discrepancy determined in step D) corresponds to a discrepancy between the gradient for rate of change in temperature with respect to time corresponding to this line and the gradient for rate of change in temperature with respect to time corresponding to the other line.

3. Method according to Claim 1, **characterized in that**, with the aircraft being a four-engine aircraft in which the set of air bleed lines comprises four lines each one associated with one of the four aircraft propulsion engines, for each of said four lines the discrepancy determined in step D) corresponds to a discrepancy between the gradient for rate of change in temperature with respect to time corresponding to this line and a median or a mean of the three gradients for rate of change in temperature with respect to time corresponding respectively to the other three lines.

4. Method according to any one of the preceding claims, **characterized in that** it further comprises:
- a data logging step performed on board the aircraft, this data logging step consisting in logging at least the temperature measurements acquired in step B) or the gradients for rate of change in temperature with respect to time determined in step C) or the discrepancy determined in step D); and
- a step whereby said data is received by a computer situated on the ground, and **in that** at least steps E) and F) are performed by said computer situated on the ground.

5. Method according to any one of the preceding claims, **characterized in that** step C) comprises a substep referred to as correction substep, consisting in correcting at least one of the gradients determined for the various lines so as to correct the effects that a difference in length between at least two lines of the set of lines has on this gradient.

6. Method according to any one of the preceding claims, **characterized in that** the line condition indicator determined in step E) as function of the discrepancy determined in step D) corresponds to a median or to a mean of a set of discrepancies determined for said line for several successive uses of the aircraft over a first expanse of time.

7. Method according to the preceding claim, **characterized in that** the set of discrepancies comprises the discrepancy determined in step D) as well as discrepancies determined for uses of the aircraft prior to the use of the aircraft for which the discrepancy is determined in step D).

8. Method according to the preceding claim, **characterized in that** the first expanse of time extends over several days.

9. Method according to any one of Claims 1 to 5, **characterized in that** the line condition indicator determined in step E) corresponds to the difference between, on the one hand, the discrepancy determined in step D) and, on the other hand, a median or a mean of a set of discrepancies determined for said line for several successive uses of the aircraft, over a second expanse of time prior, by a third expanse of time, to the use of the aircraft for which the discrepancy is determined in step D).

10. Method according to the preceding claim, **characterized in that** the second expanse of time and the third expanse of time each extend over several days.
